# EUROPÄISCHE PATENTSCHRIFT

(11) **EP 0 671 250 B1**
(45) Veröffentlichungstag und Bekanntmachung des Hinweises auf die Patenterteilung: **27.05.1998**
(21) Anmeldenummer: 95103040.2
(22) Anmeldetag: 03.03.1995
(51) Int. Cl.: B29C 44/08

(54) **Verfahren zur Herstellung von Schaumstoff-Formteilen mit Schichten unterschiedlicher Dichte**
Method of manufacturing foam articles with layers of different densities
Procédé de production des articles en mousse de couches de différentes densités

(30) Priorität: 08.03.1994 DE 4407628
(43) Veröffentlichungstag der Anmeldung: 13.09.1995
(73) Patentinhaber: BASF AKTIENGESELLSCHAFT, 67056 Ludwigshafen (DE)
(72) Erfinder: Tatzel, Hermann, D-69469 Weinheim (DE); Domas, Friedrich, D-68804 Altlussheim (DE); Lambert, Jürgen, D-67466 Lambrecht (DE)

(56) Entgegenhaltungen:
- EP-A- 0 492 201
- DE-A- 3 405 231

## Beschreibung

Die Erfindung betrifft die Herstellung von Schaumstoff-Formteilen mit Schichten unterschiedlicher Dichte aus Polyolefinschaumstoff-Partikeln.

Formteile aus Polyolefinpartikelschaumstoffen haben große Bedeutung erlangt als stoßdämpfende Verpackungen und Verpackungsteile sowie als stoß- und schockabsorbierende Teile im Ausbau von Kraftfahrzeugen, z.B. als Kern von Stoßstangen, Konsolen, Armaturenbrettern o.ä. Entsprechend den gewünschten mechanischen Eigenschaften des Formteils variieren die einzelnen Formteile in Dichte und Dicke.

Der Erfindung lag die Aufgabe zugrunde, Formteile bereitzustellen, die Schichten mit unterschiedlicher mechanischer Beanspruchbarkeit aufweisen. Dazu boten sich Polyolefinpartikelschaumstoffe mit verschiedenen Dichtebereichen an. Ein Verkleben von Einzelteilen unterschiedlicher Dichte erwies sich als technisch zu aufwendig, ein Verschweißen von solchen Einzelteilen führte nicht zu brauchbaren Formteilen.

In der EP-A 492 201 ist ein Verfahren zur Herstellung von Schaumstoff-Formkörpern mit verschiedenen Dichtebereichen beschrieben, bei dem man in einer Form, die durch herausziehbare Trennwände in mindestens zwei Kammern unterteilt ist, in die einzelnen Kammern Füllungen unterschiedlicher Dichte aus Schaumstoffpartikeln von Propylencopolymeren mit einem Schmelzpunkt zwischen 15 °C und 155 °C einbringt und nach dem Herausziehen der Trennwände durch Einleiten von Dampf oder Heißluft in die Form die Partikel erhitzt, so daß sie erweichen, sich ausdehnen und miteinander verschweißen.

Dieses Verfahren ist jedoch nur anwendbar bei der Herstellung von Formteilen einfacher Gestalt, wenn die einzelnen Bereiche unterschiedlicher Dichte etwa vergleichbare Größe und Abmessungen haben sollen; es versagt aber, wenn man z.B. Formteile herstellen will, die neben einer dicken Kernschicht eine relativ dünne Deckschicht unterschiedlicher Dichte aufweisen sollen.

Es wurde nun gefunden, daß dies möglich ist, wenn man ein Formwerkzeug verwendet, das eine verschiebbare Formwand aufweist.

Gegenstand der Erfindung ist demzufolge ein Verfahren gemäß dem Patentanspruch.

Als Schmelzpunkt gilt dabei das nach der DSC-Methode bestimmte Maximum beim zweiten Aufschmelzen einer Probe (Kristallitschmelzpunkt).

Die verwendeten Propylencopolymere haben vorzugsweise einen Schmelzpunkt zwischen 130 und 150°C, insbesondere zwischen 140 und 150°C. Copolymerisate des Propylens mit 1 bis 30 Gew.-%, insbesondere 1 bis 6 Gew.-% Ethylen und/oder eines C₄ bis C₆-α-Olefins sind besonders gut geeignet.

Der Schaumstoff ist ein sogenannter Partikelschaumstoff, wie er durch Verschweißen von Schaumstoffpartikeln üblicherweise mit einem mittleren Durchmesser von 2 bis 8 mm, vorzugsweise 3 bis 6 mm, erhältlich ist. Die mittlere Dichte des Schaumstoffs, d.h. die Dichte gemittelt über alle Dichtebereiche des Formkörpers, liegt zwischen 0,015 und 0,100 g/cm³, vorzugsweise zwischen 0,020 und 0,090 g/cm³, insbesondere zwischen 0,030 und 0,080 g/cm³.

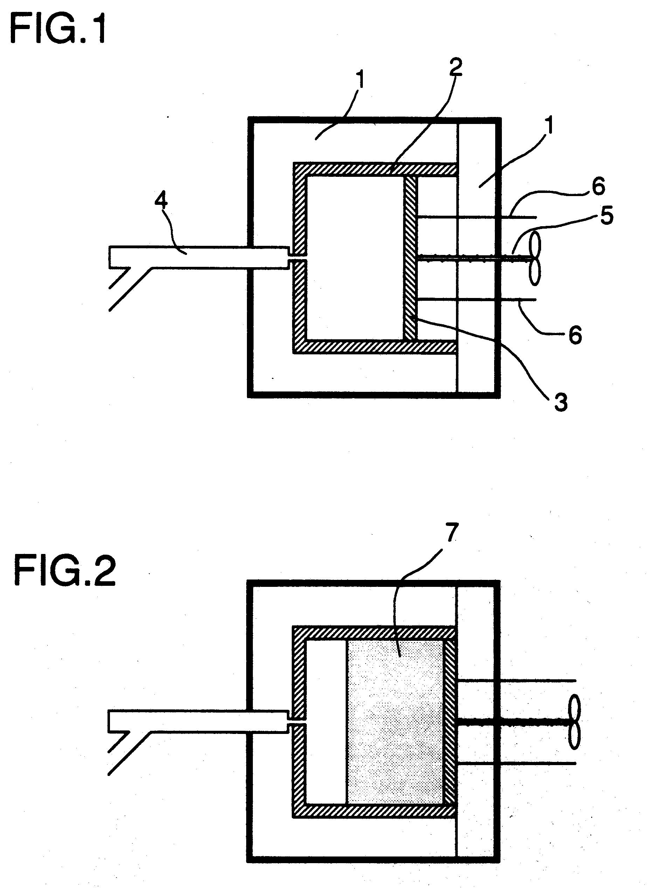

Die beigefügten Zeichnungen sind Skizzen einer Apparatur, welche für das erfindungsgemäße Verfahren geeignet ist. Figur 1 zeigt das Formwerkzeug zu Beginn des Verfahrensschrittes a, d.h. vor dem Einfüllen der Schaumstoffpartikel A; Figur 2 zeigt das selbe Formwerkzeug zu Beginn des Verfahrensschrittes b, d.h. vor dem Einfüllen der Schaumstoffpartikel B.

Die Apparatur enthält ein Formwerkzeug (2) mit einer beweglichen Formwand (3), welche jeweils eine Vielzahl von Düsen aufweisen, durch welche Dampf oder Heißluft aus den Kammern (1) in das Innere des Werkzeugs eingeleitet werden kann. Über den Füllinjektor (4) können die Schaumstoffpartikel in das Werkzeug eingebracht werden. Die Bewegung der verschiebbaren Formwand (3) geschieht mittels einer mittig angeordneten Gewindespindel (5), die manuell bedient werden kann. Zwei Führungsbolzen (6) sichern die bewegliche Formwand gegen Verdrehen ab. Vier Gewinde-Justierwellen (nicht gezeigt), die jeweils in den Ecken des Werkzeugs angebracht sind, sorgen für eine zusätzliche Parallelität des Formteils.

Bei dem erfindungsgemäßen Verfahren befindet sich die verschiebbare Formwand zunächst in der Stellung nach Figur 1, d.h. der Formhohlraum ist verkleinert (Phase a). In diesen Formhohlraum werden nun über den Füllinjektor (4) Schaumstoffpartikel A, z.B. mit einer Schüttdichte von 30 g·l⁻¹ eingefüllt. Danach wird das Werkzeug kurzzeitig bedampft, wodurch die Schaumstoffpartikel noch etwas expandieren, um die Zwickel-Hohlräume auszufüllen, und dann miteinander verschweißen. Danach kann kurz abgekühlt werden, um den entstandenen Formkörper (7) zu stabilisieren.

Bei der anschließenden zweiten Phase b) wird mittels der Gewindespindel (5) die bewegliche Formwand (3) zurückgefahren und dadurch der Formhohlraum vergrößert. Dabei muß dafür gesorgt werden, daß der Formkörper (7) ebenfalls verschoben wird, um Raum für die nachzufüllenden Schaumstoffpartikel zu schaffen, welche die zweite Schaumstoffschicht bilden sollen. Dies kann mechanisch vorgenommen werden, bevorzugt aber durch einen kurzen pneumatischen Schub durch den Füllinjektor (4). Anschließend werden dann weitere Schaumstoffpartikel B, z.B. mit einer Schüttdichte von 17 g·l⁻¹, eingefüllt, durch Bedampfen expandiert und miteinander sowie mit dem bereits vorgebildeten Formkörper (7) zu einem Formteil mit 2 Schichten unterschiedlicher Dichte verschweißt.

Das entstandene Formteil wird schließlich abgekühlt und aus dem Formwerkzeug entnommen.

Damit die Schaumstoffpartikel sich in der Form ausdehnen und die Luft aus den Zwickeln verdrängen können, müssen sie expandierbar sein. Falls sie dies nicht von Natur aus sind, muß ihnen Expandierbarkeit verliehen werden, indem man sie z.B. kurz vor dem Einfüllen in die Form entweder längere Zeit unter einem Druck von vorzugsweise 2 bis 5 bar mit Luft belädt, oder kurzzeitig mittels Druck von vorzugsweise 2 bis 6 bar komprimiert und sie dann gegen einen Staudruck, der etwas geringer als der Kompressionsdruck ist, in die Form einfüllt. Entsprechende Verfahren sind z.B. in DE-A 25 42 452, EP-A 72 499, EP-A 108 245, EP-A 224 265 und EP-A 408 948 beschrieben. Die Schaumpartikel werden in der Form vorzugsweise durch Wasserdampf unter einem Druck von etwa 3 bis 4 bar miteinander verschweißt.

Durch Variation der Formwerkzeugwände (mit und ohne Düsen), sowie unterschiedlicher Temperierungsmöglichkeiten können auch verhautete schichtförmig aufgebaute Schaumstoff-Formteile unterschiedlicher Dichte erhalten werden. Die Schaumstoff-Formteile können in den einzelnen Schichten noch übliche Zusatzstoffe enthalten, wie Farbstoffe, Pigmente, Füllstoffe, Verstärkungsstoffe, Flammschutzmittel, Formtrennmittel, Antistatika, Stabilisatoren und andere Hilfsmittel in wirksamen Mengen.

Nach dem erfindungsgemäßen Verfahren kann man z.B. ein quaderförmiges Formteil herstellen mit einer Grundschicht A, die beispielsweise 5 cm dick ist, eine Dichte von 70 g·l⁻¹ besitzt und demzufolge eine hohe Steifigkeit und Stoßabsorption aufweist, und einer Deckschicht b, die 2 cm dick ist, eine Dichte von 30 g·l⁻¹ besitzt und demzufolge eine gute Elastizität aufweist.

Die Formteile finden vorzugsweise im Kraftfahrzeugbau Verwendung, z.B. als Türverkleidungen, Armaturenbretter, Konsolen, Sonnenblenden, Stoßfänger und dergleichen.

## Patentansprüche

1. Verfahren zur Herstellung von Schaumstoff-Formteilen mit Schichten unterschiedlicher Dichte aus Schaumstoffpartikeln aus einem Propylencopolymeren mit einem Schmelzpunkt zwischen 125°C und 155°C, die noch expandierbar sind, wobei man in ein Formwerkzeug, welches eine verschiebbare Formwand aufweist,
a) zunächst Schaumstoffpartikel A einfüllt und durch Einleiten von Dampf oder Heißluft weiter expandiert und miteinander verschweißt,
b) die bewegliche Formwand verschiebt und in den entstandenen Hohlraum Schaumstoffpartikel B mit einer von A verschiedenen Dichte einfüllt und durch Einleiten von Dampf oder Heißluft weiter expandiert und miteinander und mit dem nach a) vorgebildeten Formkörper verschweißt, und
c) das entstandene Formteil abkühlt und aus dem Formwerkzeug entnimmt.

## Claims

1. A process for the production of foam moldings having layers of different density from foam particles comprising a propylene copolymer having a melting point of from 125 to 155°C, it being possible for said particles to expand further, wherein a mold having a movable mold wall is
a) first filled with foam particles A, which are further expanded and welded to one another by passing in steam or hot air,
b) the movable mold wall is moved, and foam particles B having a different density to A are introduced into the resultant cavity and further expanded and welded to one another and to the molding pre-formed in a) by passing in steam or hot air, and
c) the resultant molding is cooled and demolded.

## Revendications

1. Procédé pour la préparation d'éléments moulés en mousse dont les couches présentent des masses volumiques différentes, constitués par des particules de mousse constituées d'un copolymère de propylène possédant un point de fusion entre 125°C et 155°C, qui peuvent encore être expansées, dans lequel, dans un moule qui présente une paroi de moule mobile,
a) on remplit d'abord des particules de mousse A et, par introduction de vapeur ou d'air chaud, on les soumet à une expansion ultérieure et on les soude l'une à l'autre,
b) on déplace la paroi de moule mobile et on remplit l'espace creux obtenu avec des particules de mousse B possédant une masse volumique différente de celle de A et, par introduction de vapeur ou d'air chaud, on les soumet à une expansion ultérieure et on les soude l'une à l'autre et avec le corps moulé préformé suite à a), et
c) on refroidit l'élément moulé obtenu et on le retire du moule.
